# DEMANDE DE BREVET EUROPEEN

(11) **EP 1 429 213 A2**
(43) Date de publication de la demande: **16.06.2004**
(21) Numéro de dépôt: 03027988.9
(22) Date de dépôt: 05.12.2003
(51) Int. Cl.: G04B 11/00, G04B 5/02

(54) **Dispositif destiné à permettre une rotation dans un sens et de l'exclure dans le sens contraire**

(30) Priorité: 11.12.2002 CH 21152002
(71) Demandeur: Frank Müller Watchland S.A., CH-1294 Genthod (CH)
(72) Inventeur: Müller, Franck, CH-1294 Genthod (CH)
(74) Mandataire: Dietlin, Henri

(57) **Abrégé**

Le dispositif comprend une roue (1) munie de lamelles (4) régulièrement disposées autour d'un centre (2) et courbées dans le sens contraire à la rotation de la roue, qui est introduite à friction dans une cavité circulaire (9), la roue (1) présentant en son centre (2) un pignon (8).

## Description

L'invention a pour objet un dispositif destiné à permettre une rotation dans un sens et de l'exclure dans le sens contraire.

Le dispositif, objet de l'invention a été conçu et développé pour l'horlogerie. Il n'est cependant pas destiné uniquement au domaine horloger, car il peut être appliqué à de nombreux autres domaines de la technique, notamment en mécanique.

Dans une pièce d'horlogerie on trouve un système de remontage qui permet de recharger l'organe fournissant l'énergie à la montre (par exemple : le ressort de barillet dans les montres mécaniques)

Un tel système porte le nom de remontage manuel ; il se compose des éléments suivants : rochet, barillet, roue de couronne, pignon de remontoir, pignon coulant, tige de remontoir, couronne de remontage et cliquet.

Lorsque l'on est en position de remontage, le pignon coulant est plaqué contre le pignon de remontoir, mais n'entraîne celui-ci que dans un sens. Si l'on actionne la couronne de remontoir dans ce sens, on entraîne le rouage jusqu^à l'arbre du barillet. Celui-ci est solidaire du rochet, **retenu en rotation par un cliquet**. Ce cliquet empêche le rochet de revenir en arrière, ce qui oblige le ressort de barillet à se détendre dans la direction opposée. **Pour que le remontage soit effectif, il s'agit donc de faire passer une dent du rochet sous le cliquet**. En effet si l'on ne passe pas complètement la dent sous le cliquet, le ressort de barillet ramène le rochet à sa position de base.

Ce système manuel est parfois doublé d'un système de remontage auxiliaire (système à masse oscillante, par ex.), appelé remontage automatique. Un tel système permet de fournir de l'énergie à la source de la montre sans se servir de la tige de remontage. Cela en agissant sur un des mobiles du système de remontage en place.

Le système à masse oscillante, par exemple, utilise les mouvements du bras du porteur pour faire balancer une masse oscillante et ainsi actionner le rouage du système de remontage. C'est l'inertie de la masse qui fournit le couple nécessaire au remontage. Comme pour le remontage mécanique, le ressort de barillet ne se recharge que dans un sens ; il n'y a donc qu'une direction dans laquelle la masse remonte la montre.

Grâce à un train de rouages (à cliquet par exemple), la dernière roue du système tourne, toujours dans le même sens, quel que soit le sens de rotation de la masse.

D'autre part, si un rochet comporte par exemple 80 dents, il faut au moins un déplacement du rochet de (360°/80 = 4.5°) pour prendre en compte le déplacement de la masse oscillante.

Si la masse oscillante d'un calibre automatique n'a pas assez tourné autour de son axe de rotation pour faire déplacer, par l'intermédiaire d'un rouage de transmission, le rochet d'une valeur de 4.5°, le ressort ne s'arme pas !

Le but de l'invention est de profiter du moindre déplacement de la masse oscillante en enregistrant dans le barillet les plus petits mouvements du porteur de la montre et consiste à pouvoir remplacer une roue et son encliquetage dans tous les types de mécanismes de façon à ce que le moindre mouvement du dispositif selon l'invention, arme le ressort de barillet d'une montre ou d'un autre type de mécanisme à accumulation d'énergie mécanique.

Le dispositif selon l'invention est caractérisé en ce qu'il comprend une roue à palettes formée d'une succession de lamelles régulièrement disposée autour d'un centre de rotation ou autour d'une circonférence, les lamelles étant inclinées ou courbées dans le sens contraire à la rotation de la roue, la roue à palettes étant introduite à friction dans une cavité circulaire ou sur une pièce centrale.

Avec le dispositif selon l'invention, le moindre mouvement est enregistré puisqu'il n'y a pas de dent au rochet. On peut donc assimiler notre « roue à palettes » à un rochet lisse.

Selon un mode d'exécution, la succession de lamelles s'étend à partir d'un centre vers l'extérieur, la roue étant introduite dans une cavité circulaire d'un diamètre légèrement inférieur au diamètre des lamelles.

L'invention a également pour objet un procédé de fabrication du dispositif selon l'invention caractérisé en ce que la roue à palettes est réalisée par usinage, par enlèvement de copeaux, par découpage au fil, électroérosion par fil, par électroformage, par découpage à l'étampe, par des techniques de micro-moulage obtenus par illumination de résine sensible aux U.V., par dépôts galvaniques dans des micro-moules, ou encore par des traitements galvaniques sur des supports sans micro-moule.

Le dessin représente à titre d'exemple, deux modes d'exécution ainsi qu'une variante du dispositif selon l'invention :

Dans le dessin :
- La Fig.1 est une vue de principe montrant le fonctionnement d'une roue à palettes.
- La Fig.2 représente une vue d'un premier mode d'exécution de la roue à palettes avec un orifice central de forme polygonale.
- La Fig.3 est une vue d'un deuxième mode d'exécution de la roue à palettes avec en son centre un pignon d'entraînement.
- La Fig.4 est une coupe à travers la roue de la Fig.3, et
- La Fig.5 est une vue d'une variante du mode d'exécution de la Fig.3.

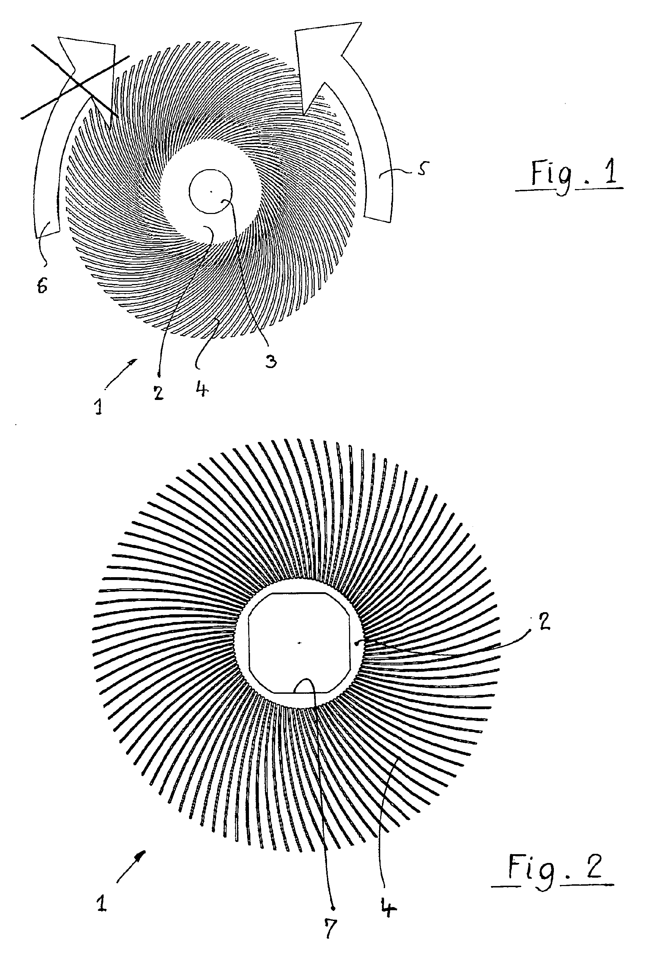

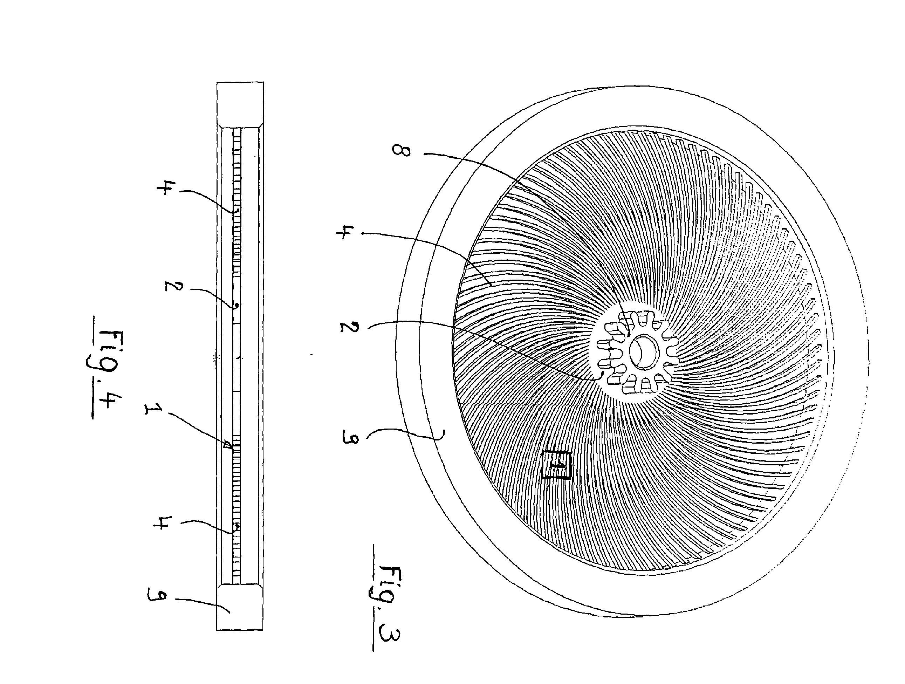

La vue de principe représentée dans la Fig.1, montre une roue à palettes 1 formée d'une partie centrale 2 présentant en son centre un alésage 3, une série de lamelles 4 s'étendant à partir du centre 2 vers l'extérieur et présentant une courbure allant dans le sens des aiguilles d'une montre.

L'homme du métier comprend aisément que si la roue à palettes 1 est introduite à friction dans une cavité circulaire non représentée, une rotation dans le sens de la flèche 5 sera possible, alors qu'une rotation en sens contraire selon la flèche 6 de la Fig.1 est impossible.

Dans le mode d'exécution de la Fig.2, la roue à palettes 1 présente une partie centrale 2 munie d'un alésage 7 de forme polygonale, qui pourra recevoir un axe non représenté. Les lamelles 4 s'étendent dans le mode d'exécution de la Fig.2 vers l'extérieur à partir du centre 2 et sont courbées dans le sens contraire aux aiguilles d'une montre. Placée dans une cavité non représentée, la roue 1 pourra effectuer une rotation dans le sens des aiguilles d'une montre, alors qu'une rotation en sens inverse est absolument impossible. On comprend facilement que la roue à lamelles 1 de la Fig.2 remplace avantageusement une roue à cliquet avec un avantage important, selon lequel le pas de l'avance de la roue est infinitésimal.

Il est évident que la cavité non représentée qui entoure les lamelles 4 peut présenter sur son pourtour extérieur un pignon d'entraînement non représenté muni d'un nombre important de dents.

Dans le mode d'exécution des Fig. 3 et 4, le centre 2 de la roue à lamelles 1 présente un pignon central intégré 8 permettant l'entraînement d'un mobile complet. Le pignon 8 remplace le rochet dans un mécanisme standard et les ailettes 4 remplacent l'encliquetage standard du mécanisme. Finalement, les ailettes ou lamelles 4 sont introduites à friction dans une cavité circulaire 9 et solidaire d'un mécanisme non représenté.

Il est possible de réaliser le mode d'exécution des Fig.3 et 4 par différents moyens connus à ce jour, comme l'usinage traditionnel par enlèvement de copeaux, par découpage au fil (électroérosion à fil), ou par électroformage (électroérosion en plongée), ou par découpage à l'étampe, ou encore par des techniques de micro-moulage obtenu par illumination de résine sensible aux rayons ultraviolet, ou encore par des méthodes de dépôts galvaniques dans les micro-moules, ou encore par traitement galvanique sur un support sans micro-moule.

Ce bloc de composants peut être réalisé en matières plastiques ou métalliques ou les deux ensembles, par injection ou dépôt galvanique dans des micro-moules.

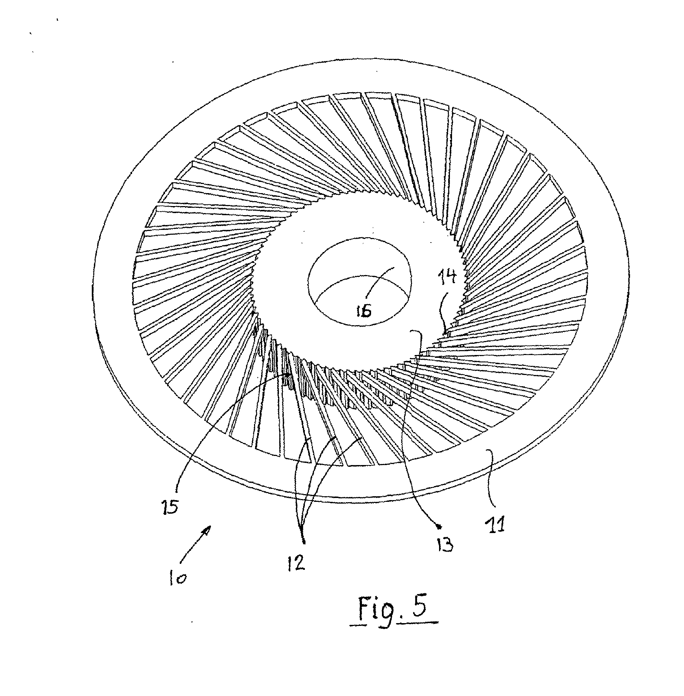

Dans la variante de la Fig.5, la roue à palettes 10 comprend une partie circulaire 11 solidaire d'une série de lamelles 12 inclinées dans le sens contraire aux aiguilles d'une montre. Les lamelles 12 sont dirigées vers le centre de la roue 10, et montée à friction sur une pièce centrale 13 présentant un trou central, dans lequel peut être monté un axe ou un pignon non représenté. Dans le mode d'exécution de la Fig.5, la pièce centrale 13 présente des rainures 14, contre lesquelles viennent buter l'extrémité des lamelles 12. Les rainures 14 ne sont pas absolument nécessaires, car l'effet de friction entre les lamelles et la surface 15 suffit pour que le dispositif fonctionne.

La surface extérieure 15 de la pièce 13 peut par conséquent être lisse ou rugueuse.

La partie circulaire 11 peut être solidaire d'un mécanisme non représenté, ou comprendre une denture destinée à en faire un pignon.

Les modes d'exécution du dispositif qui viennent d'être décrits, peuvent être utilisés avantageusement dans l'horlogerie pour replacer un rochet et un cliquet dans un mécanisme de remontage automatique ou pour contrôler tout rouage qui ne doit absolument pas se déplacer selon un sens de rotation, notamment dans une répétition-minute, ou la roue à lamelles prend la place de la roue à cliquet et du cliquet de la fusée.

Le dispositif selon l'invention peut également être utilisé dans le cas de certains affichages par une aiguille, comme dans le cas d'une seconde indirecte ou l'aiguille peut avoir un ébat latéral, puisque son rouage entraîneur n'est pas constamment sous tension. Pour corriger ce défaut ou plus exactement pour le cacher, on place un ressort « clinquant » sur le mobile portant l'aiguille, de façon à ce que le mobile ne bouge pas lors d'un choc ou d'un changement de position.

Notre invention permet d'améliorer considérablement la fonction du « clinquant ». Le dernier mobile d'un rouage indirect portant l'aiguille indicatrice de fonction est munie d'une roue à palettes, lui permettant d'être entraînée par le rouage indirect et en même temps de tenir une position angulaire, sans retour en arrière possible.

Comme mentionné plus haut, l'invention n'est pas uniquement destinée à l'horlogerie, mais peut être appliquée à tous les domaines de la mécanique ou de la micro-mécanique.

Il est par exemple sans autre possible de réaliser avec une roue à lamelles renforcée un cric pour voiture ou tout dispositif susceptible d'être mis en rotation sans revenir en arrière.

Quant au procédé de fabrication revendiqué, il pourra être mis en oeuvre par différents moyens connus à ce jour, comme l'usinage traditionnel par enlèvement de copeaux, par découpage au fil, par électroérosion par fil, par électroformage, par découpage à l'étampe, par des techniques de micro-moulage obtenus par illumination de résine sensible aux U.V. et également par des méthodes de dépôts galvaniques dans des micro-moules, ou encore par des traitements galvaniques sur des supports sans micro-moule.

Les pièces ainsi réalisées pourront être en matière plastique ou métallique ou les deux ensemble, par injection ou dépôt galvanique dans des micro-moules.

## Revendications

1. Dispositif destine à permettre une rotation dans un sens et de l'exclure dans le sens contraire, **caractérisé en ce qu'**il comprend une roue à palettes formée d'une succession de lamelles régulièrement disposées autour d'un centre de rotation ou autour d'une circonférence, les lamelles étant inclinées ou courbées dans le sens contraire à la rotation de la roue, la roue à palettes étant introduite à friction dans une cavité circulaire ou sur une pièce centrale.

2. Dispositif selon la revendication 1, **caractérisé en ce que** la succession de lamelles s'étend à partir d'un centre vers l'extérieur, la roue étant introduite dans une cavité circulaire d'un diamètre légèrement inférieur au diamètre des lamelles.

3. Dispositif selon la revendication 1, **caractérisé en ce que** la succession de lamelles s'étend à partir d'une circonférence vers l'intérieur, la roue étant introduite sur une pièce centrale circulaire d'un diamètre légèrement plus grand que le cercle formé par l'ensemble des extrémités des lamelles.

4. Dispositif selon la revendication 1, **caractérisé en ce que** la cavité ou la pièce centrale présente une surface lisse.

5. Dispositif selon la revendication 1, **caractérisé en ce que** la cavité ou la pièce centrale présente une surface rugueuse ou des stries.

6. Dispositif selon la revendication 1, **caractérisé en ce que** les lamelles courbées ou inclinées sont au moins au nombre de trois.

7. Dispositif selon la revendication 1, **caractérisé en ce que** les lamelles, le centre ou la circonférence sont en matière plastique et/ou en métal.

8. Dispositif selon la revendication 1, **caractérisé en ce que** le centre ou la circonférence de la roue à palettes comprend une roue à pignons.

9. Dispositif selon la revendication 1, **caractérisé en ce que** le centre ou la circonférence de la roue à palettes comprend un alésage ou des surfaces polygonales permettant d'entraîner un axe de même configuration.

10. Procédé de fabrication du dispositif selon la revendication 1, **caractérisé en ce que** la roue à palettes est réalisée par usinage, par enlèvement de copeaux, par découpage au fil, électroérosion par fil, par électroformage, par découpage à l'étampe, par des techniques de micro-moulage obtenus par illumination de résine sensible aux U.V., par dépôts galvaniques dans des micro-moules, ou encore par des traitements galvaniques sur des supports sans micro-moule.
